# EUROPEAN PATENT APPLICATION

(11) **EP 4 593 231 A1**
(43) Date of publication of application: **30.07.2025**
(21) Application number: 23868208.2
(22) Date of filing: 20.09.2023
(51) Int. Cl.: H02J 3/38, G05F 1/67, H02J 7/35, H02S 40/34, H02S 40/38

(54) **POWER GENERATION SYSTEM**

(30) Priority: 21.09.2022 JP 2022149988
(71) Applicant: GS Yuasa International Ltd., Kisshoin, Minami-ku, Kyoto-shi, Kyoto 601-8520 (JP)
(72) Inventor: SHIMAO, Toshihiro, Kyoto-shi, Kyoto 601-8520 (JP); TAKAGI, Kazuto, Kyoto-shi, Kyoto 601-8520 (JP); ITO, Yoichi, Kyoto-shi, Kyoto 601-8520 (JP)
(74) Representative: Grünecker Patent- und Rechtsanwälte PartG mbB
(86) International application number: PCT/JP2023/034065
(87) International publication number: WO 2024/063087

(57) **Abstract**

A power generating system (1) includes: power generating devices (2₁ to 2ₙ); a junction box (5) including a plurality of diodes (D₁ to Dₙ) each configured to prevent backflow to a corresponding one of the power generating devices (2₁ to 2ₙ); a converter (32) configured to convert power generated by the power generating devices (2₁ to 2ₙ) into power suitable for a load; and a capacitor (31) connected to a common wiring line connecting the junction box (5) and the converter (32). The converter (32) is configured to perform constant voltage control so that a capacitor voltage (Vc) of the capacitor (31) becomes a voltage command value (VA) that is preset.

## Description

### TECHNICAL FIELD

The present invention relates to a power generating system in which power generated by power generating devices is converted into power suitable for a load and that supplies the converted power.

### BACKGROUND ART

In recent years, a solar cell has been in widespread use. However, power generated by the solar cell is affected by environmental conditions such as seasons and weather, and insufficient generated power that is weak is obtainable under adverse conditions. The weak generated power is lost in a power conditioner, a DC-DC converter, or the like, and thus the weak generated power is actually unusable. A technique has been proposed in which a weak current generated by power generation is efficiently collected by a capacitor and power generated by a solar cell is efficiently used (see, for example, Patent Document 1).

In Patent Document 1, a capacitor is included, which is connected to a solar cell. When an amount of power generated by the solar cell exceeds a predetermined value, the power from the solar cell is supplied to a load, and when the amount of power generated by the solar cell is equal to or lower than the predetermined value, the capacitor is charged with the power from the solar cell.

### PRIOR ART DOCUMENT

### PATENT DOCUMENT

Patent Document 1: JP-A-2018-129980

### SUMMARY OF THE INVENTION

### PROBLEMS TO BE SOLVED BY THE INVENTION

In the conventional technique, a switch element is turned on and off in accordance with the amount of power generated by the solar cell, whereby control is performed as to whether the capacitor is charged or not. Therefore, in a case where a plurality of solar cells is installed, there is a difference between respective amounts of power generated by the plurality of solar cells. Thus, it is necessary to provide respective switch elements in the plurality of solar cells and to perform complicated control of turning on and off the switch elements in accordance with the amounts of power generated by the plurality of solar cells.

One aspect of the present invention provides a power generating system in which weak power of a plurality of power generating devices, in parallel with each other, connected to a power converting device is utilized by charging a capacitor with the weak power, without using a switch element.

### MEANS FOR SOLVING THE PROBLEMS

One aspect of the present invention includes: a plurality of power generating devices; a plurality of diodes each configured to prevent backflow to a corresponding one of the plurality of power generating devices; a converter configured to convert power generated by the plurality of power generating devices into power suitable for a load; and a capacitor connected to a common wiring line connecting each of the plurality of diodes and the converter.

### BRIEF DESCRIPTION OF THE DRAWINGS

Fig. 1 is a diagram illustrating a circuitry configuration of an embodiment of a power generating system.
Fig. 2 is a diagram illustrating a P-V characteristic of a power generating device illustrated in Fig. 1.
Fig. 3 is a diagram illustrating a relationship between generated power and a capacitor voltage.

### MODE FOR CARRYING OUT THE INVENTION

Hereinafter, an embodiment of the present invention will be described in detail with reference to the drawings. In the following embodiments, components exhibiting similar functions are denoted by an identical reference sign, and the description thereof will be omitted as appropriate.

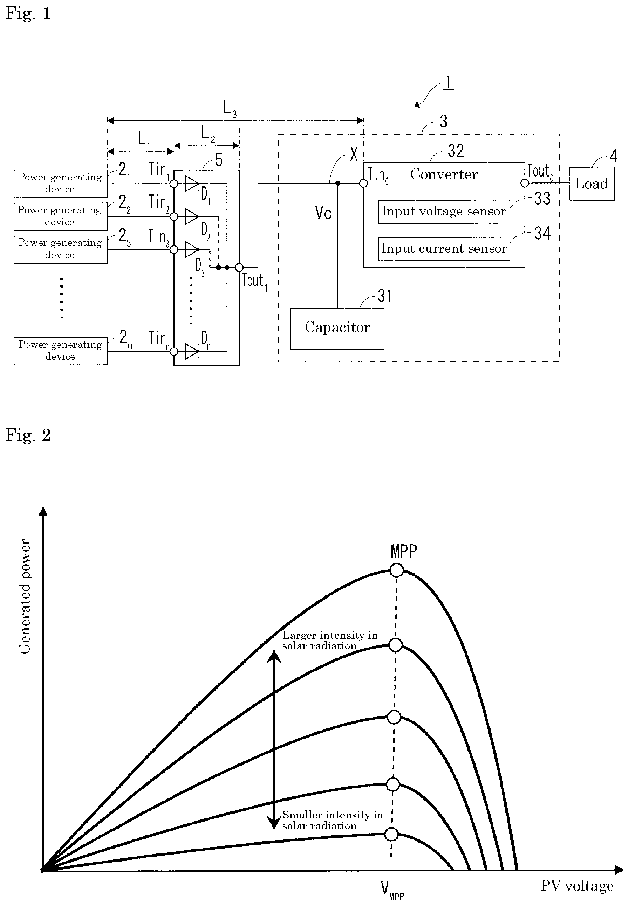

Referring to Fig. 1, a power generating system 1 of the present embodiment causes power generated by n (n is an integer of two or more) power generating devices 2₁ to 2ₙ to be converted into power suitable for a load 4 by a power converting device 3, and supplies the converted power. The power generating system 1 includes the power generating devices 2₁ to 2ₙ, a junction box 5, and the power converting device 3.

Each of the power generating devices 2₁ to 2ₙ is power generating equipment, of a type in which generated power varies in accordance with an external environment, whose example includes a solar cell or plant-based power generation that generates power from natural energy. In the present embodiment, the power generating device 2 will be described as a solar cell.

The power generating devices 2₁ to 2ₙ have the same P-V characteristic. As illustrated in Fig. 2, each of the power generating devices 2₁ to 2ₙ has a P-V characteristic in which a maximum power point voltage V_{MPP} at which any generated power is the highest hardly changes regardless of change in solar radiation.

The junction box 5 includes n input terminals Tin₁ to Tinₙ respectively connected to the power generating devices 2₁ to 2ₙ, and an output terminal Tout₁. The input terminals Tin₁ to Tinₙ are connected to the output terminal Tout₁ via diodes D₁ to Dₙ for backflow prevention, respectively. The diodes D₁ to Dₙ, include respective anodes, each of which is connected to the corresponding one of the input terminals Tin₁ to Tinₙ, and include respective cathodes, each of which is connected to the output terminal Tout₁.

The wiring line lengths of lines each connecting a corresponding one of the power generating devices 2₁ to 2ₙ and a corresponding one of the input terminals Tin₁ to Tinₙ of the junction box 5 are made substantially equal to a wiring line length L₁.

In the junction box 5, the wiring line lengths of lines each connecting a corresponding one of the input terminals Tin₁ to Tinₙ and the output terminal Tout₁ are made substantially equal to a wiring line length L₂.

The power converting device 3 includes a capacitor 31 and a converter 32.

The capacitor 31 is connected to a wiring line X connecting the output terminal Tout₁ of the junction box 5 and an input terminal Tin₀ of the converter 32. In other words, the capacitor 31 is connected to the wiring line X without a switch element interposed therebetween. The wiring line X is a common wiring line connecting each of the cathodes of the diodes D₁ to Dₙ and the input terminal Tin₀ of the converter 32. The capacitor 31 exhibits a charge curve in which the voltage is gradually increased from 0 V by charge, and the capacitor 31 is directly charged with power generated by the power generating devices 2₁ to 2ₙ via the junction box 5. The capacitor 31 functions as a buffer that supports a voltage necessary for operation of the converter 32, during a normal state when the power generating devices 2₁ to 2ₙ generate sufficient power. The lower limit of the capacity of the capacitor 31 is determined from the loss of the converter 32, and the upper limit of the capacity of the capacitor 31 is determined by a charge time (an amount of power) desired to be secured during a time when the power generating devices 2₁ to 2ₙ generate low power (during a time of weak light in the case of solar cells).

As the capacitor 31, a nano-hybrid capacitor (NHC) or a super redox capacitor (SRC) can be used.

The converter 32 is a converter that converts power generated by the power generating device 2 and input from the input terminal Tin₀ into power suitable for the load 4, and that outputs the converted power from an output terminal Tout₀. In a case where the load 4 is an AC system, self-consumption, or the like, and power suitable therefor is AC power, a DC-AC converter (for example, a power conditioner) is employed as the converter 32. In a case where the load 4 is a storage battery or the like and power suitable therefor is DC power, a DC-DC converter (for example, a battery charger) is employed as the converter 32.

The converter 32 operates with voltage control of a voltage of the capacitor 31, that is, a voltage of the wiring line X (hereinafter, referred to as a capacitor voltage Vc) so that the capacitor voltage Vc matches a preset voltage command value VA. For example, in a case where the power generating device 2 is a solar cell, maximum power point tracking control (MPPT control) is not performed. During a normal time when the power generating device 2 generates sufficient power, the capacitor voltage Vc is fixed to the voltage command value VA, and power generated by the power generating device 2 and output power of the converter 32 become equal to each other.

For the voltage command value VA, a voltage drop Vd across each of respective lines having a wiring line length L₃ from the power generating devices 2₁ to 2ₙ to the converter 32 is set in advance, and the voltage command value VA is set to a value obtained by subtracting the voltage drop Vd from the maximum power point voltage V_{MPP} of a corresponding one of the power generating devices 2₁ to 2ₙ. Note that in Fig. 1, the shortest distance between each of the power generating devices 2₁ to 2ₙ and the input terminal Tin0 is illustrated as the wiring line length L₃ for simplification. However, note that when the wiring lines are bent, the sum of the lengths of the wiring lines is the wiring line length L₃.

The wiring line length L₃ is a value obtained by adding a wiring line length of the common wiring line X to the wiring line length obtained by the wiring line length L₁ + the wiring line length L₂. That is, the wiring line lengths each from a corresponding one of the power generating devices 2₁ to 2ₙ to the converter 32 are made equal to the wiring line length L₃. The maximum power point voltage V_{MPP} of each of the power generating devices 2₁ to 2ₙ is substantially constant regardless of change in solar radiation, as described above. Therefore, by performing voltage control so that the capacitor voltage Vc matches the voltage command value VA (the maximum power point voltage V_{MPP} - the voltage drop Vd), the operation is performed at a maximum power point MPP of each of the power generating devices 2₁ to 2ₙ.

When the wiring line length L₃ is short and the voltage drop Vd is small, the voltage command value VA may be the maximum power point voltage V_{MPP} of each of the power generating devices 2₁ to 2ₙ.

The voltage command value VA may be calculated on the basis of an input current Iin to the converter 32, while the maximum power point voltage V_{MPP} and wiring impedance im of the wiring line length L₃ are used as known values. The input current Iin to the converter 32 is detected by an input current sensor 34 built in the converter 32 or an external current sensor.

The voltage drop Vd across the wiring line length L₃ can be expressed by the wiring impedance im × the input current Iin. Therefore, the converter 32 calculates the voltage command value VA with the maximum power point voltage V_{MPP} - (the wiring impedance im × the input current Iin). It is possible to reflect the voltage drop Vd, across the wiring line length L₃, that changes in accordance with the total amount of power generated by the power generating devices 2₁ to 2ₙ. Thus, each of the power generating devices 2₁ to 2ₙ operates more accurately at the maximum power point MPP.

Here, in a case where an installer installs a plurality of power generating devices (for example, solar panels) at an installation location, the installer does not cause the wiring line lengths of lines connecting the plurality of power generating devices and the junction box 5 to be made equal to each other unless otherwise a manufacturer specifies that the wiring line lengths are made equal to each other. If the manufacturer specifies that the wiring line lengths of the lines are made equal to each other, the lengths of the lines connecting the plurality of power generating devices and the junction box 5 are made substantially equal to each other, and respective voltage drops across the lines are also substantially equalized. The junction box 5 is designed such that the lengths of the plurality of lines inside the junction box 5 are substantially equal to each other. By causing the wiring line length from each of the power generating devices to the converter 32 to be made substantially equal to the wiring line length L3, it is possible to make unnecessary MPPT control for the plurality of power generating devices through the power converting device 3, and it is possible to apply a simple control law. It is sufficient that the voltage drops of the lines from the power generating devices to the converter 32 are substantially equalized. Therefore, instead of making the wiring line lengths equal to each other, appropriate wiring lines may be selected such that the voltage drops across the lines in each of the section L1 and the section L2 illustrated in Fig. 1 are substantially equalized. In order to equalize the voltage effect of each line, a weak voltage drop element (such as a resistor) may be used.

For the converter 32, an operation stop voltage VL is preset, and the converter 32 stops conversion operation when the capacitor voltage Vc falls below the operation stop voltage VL. In a state where the converter 32 stops operating, the capacitor 31 is charged with the power generated by the power generating device 2, and the capacitor voltage Vc increases.

For the converter 32, an operation start voltage VH higher than the operation stop voltage is preset. When the capacitor voltage Vc exceeds the operation start voltage VH, the converter 32 starts the conversion operation. The operation start voltage VH is set to a value lower than the voltage command value VA.

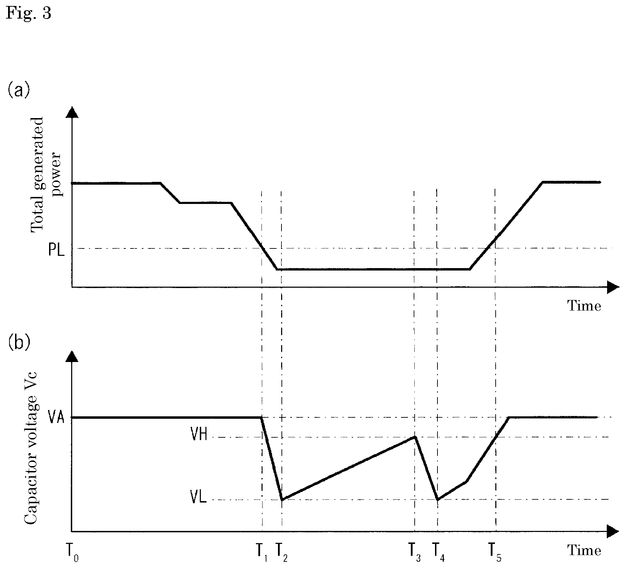

Next, a relationship between total power, generated by the power generating devices 2₁ to 2ₙ, and the capacitor voltage Vc will be described in detail with reference to Fig. 3. In Fig. 3, (a) illustrates a time transition of the total power generated by the power generating devices 2₁ to 2ₙ, and (b) illustrates a time transition of the capacitor voltage Vc.

During a normal time when the power generating devices 2₁ to 2ₙ generate sufficient power, the capacitor voltage Vc is in a state of being fixed to the voltage command value VA with the voltage control through the converter 32 as from a time T₀ to a time T₁. The capacitor 31 functions as a buffer that supports the voltage necessary for the operation of the converter 32. Power output from the converter 32 to the load 4 is equal to the total power generated by the power generating devices 2₁ to 2ₙ.

When the total power generated by the power generating devices 2₁ to 2ₙ falls below a minimum operation power set value PL for the converter 32 at the time T₁, the power with which the capacitor 31 has been charged starts to be consumed, and the capacitor voltage Vc decreases. The minimum operation power set value PL is operation power for the converter 32 at which or under which the efficiency of the converter 32 is low and thus most of the power generated by the power generating device 2 is lost in the converter 32. The minimum operation power set value PL is not a value set externally but a value set by the characteristics of the converter 32.

When the capacitor voltage Vc falls below the operation stop voltage VL at a time T₂, the converter 32 stops the conversion operation. In a state where the converter 32 stops the conversion operation, the capacitor 31 is charged with the total power generated by the power generating devices 2₁ to 2ₙ. The capacitor voltage Vc increases, as from the time T₂ to a time T₃. That is, the capacitor 31 is charged with the total power generated by the power generating devices 2₁ to 2ₙ even when the total power is such weak power that falls below the minimum operation power set value PL and that is lost in the converter 32.

When the capacitor voltage Vc exceeds the operation start voltage VH at the time T₃, the converter 32 starts the conversion operation. When the capacitor voltage Vc decreases and the capacitor voltage Vc falls below the operation stop voltage VL at a time T₄, the converter 32 stops the conversion operation. After the capacitor 31 is charged with the weak power generated by the power generating devices 2₁ to 2ₙ from the time T₂ to the time T₃, the weak power is supplied to the load 4 through the converter 32 from the time T₃ to the time T₄.

Then, at a time T₅ when the capacitor voltage Vc exceeds the operation start voltage VH and the converter 32 starts the conversion operation, the capacitor voltage Vc shifts to a state of being fixed to the voltage command value VA, in a case where the power generated by the power generating device 2 exceeds the minimum operation power set value PL.

### (Summary)

The power converting device according to each embodiment of the present invention can also be described as follows.
(1) The power generating system 1 according to an embodiment of the present implementation includes: power generating devices 2₁ to 2ₙ; a plurality of diodes D₁ to Dₙ (a junction box 5) each configured to prevent backflow to a corresponding one of the power generating devices 2₁ to 2ₙ; a converter 32 configured to convert power generated by the power generating devices 2₁ to 2ₙ into power suitable for a load; and a capacitor 31 connected to a wiring line X connecting the junction box 5 and the converter 32.

With the power generating system 1 according to the embodiment of the present invention, it is possible to utilize weak power of the power generating devices 2₁ to 2ₙ, in parallel with each other, connected to the power converting device 3, by charging the capacitor 31 with the weak power, without using a switch element. The power generating system 1 can efficiently generate power by using each of the power generating devices 2₁ to 2ₙ even if there is a difference between ways of incidence of solar radiation on the power generating devices 2₁ to 2ₙ.

(2) In the power generating system 1 according to (1), the converter 32 may be configured to perform constant voltage control so that a capacitor voltage Vc of the capacitor 31 becomes a voltage command value VA that is preset.

With the power generating system 1 according to (2), it is possible to efficiently utilize the power generated by the power generating devices 2₁ to 2ₙ.

(3) In the power generating system 1 according to (2), respective wiring line lengths L₃ from the plurality of the power generating devices 2₁ to 2ₙ to the converter 32 may be set to be equal to each other, and the voltage command value VA may be set to a value obtained by subtracting a voltage drop Vd, due to each of lines having the respective wiring line lengths L₃, from a maximum power point voltage V_{MPP} of a corresponding one of the power generating devices 2₁ to 2ₙ.

With the power generating system 1 according to (3), it is possible to operate each of the power generating devices 2₁ to 2ₙ at the maximum power point MPP. For example, when a plurality of solar panels is mounted on a moving object (a roof of a vehicle, a deck of a ship, or the like), it is possible to reduce the wiring line length L₃, and thus it is possible to construct the realistic power generating system 1 without considering the voltage drop Vd across the wiring line length L₃.

(4) In the power generating system 1 according to (2), the converter 32 may be configured to perform constant voltage control so that the capacitor voltage Vc of the capacitor 31 becomes a maximum power point voltage V_{MPP} of each of the power generating devices 2₁ to 2ₙ.

With the power generating system 1 according to (4), the voltage command value VA can be set without considering the wiring line length L₃, in a case where the wiring line length L₃ is short and in a case where the voltage drop Vd is small. Thus, it is possible to simplify setting of the voltage command value VA.

(5) In the power generating system 1 according to (4), the converter 32 may be configured to stop operating when a voltage of the capacitor 31 falls below an operation stop voltage VL that is preset and that is lower than the voltage command value VA, and start operating when the voltage of the capacitor 31 exceeds an operation start voltage VH that is preset and that is higher than the operation stop voltage VL.

With the power generating system 1 according to (5), simply by setting the operation stop voltage VL, at which the converter 32 stops operating, and the operation start voltage VH, at which the converter 32 starts operating, it is possible to utilize weak power of the power generating devices 2₁ to 2ₙ by charging the capacitor 31 with the weak power, without using a switch element.

(6) In the power generating system 1 according to (1), the converter 32 may be configured to perform constant voltage control so that a capacitor voltage Vc of the capacitor 31 becomes a voltage command value VA calculated based on an input current Iin.

With the power generating system 1 according to (6), it is possible to reflect the voltage drop Vd, across the wiring line length L₃, that changes in accordance with the total amount of power generated by the power generating devices 2₁ to 2ₙ. Thus, each of the power generating devices 2₁ to 2ₙ operates more accurately at the maximum power point MPP.

Although the present invention has been described above with reference to the specific embodiments, it goes without saying that the embodiments described above are merely examples and can be changed and implemented within the scope not departing from the gist of the present invention.

### DESCRIPTION OF REFERENCE SIGNS

1: Power generating system
2₁ to 2ₙ: Power generating device
3: Power converting device
4: Load
5: Junction box
31: Capacitor
32: Converter
34: Input current sensor
D₁ to Dₙ: Diode
im: Wiring impedance
Iin: Input current
MPP: Maximum power point
PL: Minimum operation power set value
VA: Voltage command value
VH: Operation start voltage
VL: Operation stop voltage
V_{MPP}: Maximum power point voltage
Vc: Capacitor voltage
Vd: Voltage drop
X: Wiring line

## Claims

1. A power generating system comprising:
a plurality of power generating devices;
a plurality of diodes each configured to prevent backflow to a corresponding one of the plurality of power generating devices;
a converter configured to convert power generated by the plurality of power generating devices into power suitable for a load; and
a capacitor connected to a common wiring line connecting each of the plurality of diodes and the converter.

2. The power generating system according to claim **1,** wherein the converter is configured to perform constant voltage control so that a capacitor voltage of the capacitor becomes a voltage command value that is preset.

3. The power generating system according to claim 2, wherein
respective wiring line lengths from the plurality of power generating devices to the converter are set to be equal to each other, and
the voltage command value is set to a value obtained by subtracting a voltage drop, due to each of lines having the respective wiring line lengths, from a maximum power point voltage of a corresponding one of the plurality of power generating devices.

4. The power generating system according to claim 2, wherein the converter is configured to perform constant voltage control so that the capacitor voltage of the capacitor becomes a maximum power point voltage of each of the plurality of power generating devices.

5. The power generating system according to claim 2, wherein the converter is configured to stop operating when a voltage of the capacitor falls below an operation stop voltage that is preset and that is lower than the voltage command value, and start operating when the voltage of the capacitor exceeds an operation start voltage that is preset and that is higher than the operation stop voltage.

6. The power generating system according to claim 1, wherein the converter is configured to perform constant voltage control so that a capacitor voltage of the capacitor becomes a voltage command value calculated based on an input current to the converter.
